# EUROPEAN PATENT SPECIFICATION

(11) **EP 0 679 611 B1**
(45) Date of publication and mention of the grant of the patent: **28.07.1999**
(21) Application number: 95106104.3
(22) Date of filing: 24.04.1995
(51) Int. Cl.: C01F 7/30, C01F 7/46, C01F 7/02

(54) **Method for producing alpha-alumina powder**
Verfahren zur Herstellung von Alpha-Aluminiumoxidpulver
Procédé de production de l'alumine d'alpha

(30) Priority: 28.04.1994 JP 11352994
(43) Date of publication of application: 02.11.1995
(73) Proprietor: SUMITOMO CHEMICAL COMPANY LIMITED, Osaka-shi, Osaka 541-0041 (JP)
(72) Inventor: Mohri, Masahide, Tsukuba-shi, Ibaraki-ken (JP); Koike, Hironobu, Tsukuba-shi, Ibaraki-ken (JP); Sawabe, Yoshinari, Tsukuba-shi, Ibaraki-ken (JP)
(74) Representative: VOSSIUS & PARTNER

(56) References cited:
- EP-A- 0 048 691
- EP-A- 0 223 493
- EP-A- 0 620 188
- WO-A-93/24680
- WO-A-93/24682
- DE-B- 1 159 418
- DATABASE WPI Section Ch, Week 8714, Derwent Publications Ltd., London, GB; Class E33, AN 98164 K. NIVA ET AL. 'Removal of silicon in alumina or aluminium hydroxide.' & JP-A-62 046 922 (RYOKA KEIKINZOKU) 28 February 1987
- CHEMICAL ABSTRACTS, vol. 104, no. 10, March 1986, Columbus, Ohio, US; abstract no. 77187t, Z. RYTIR ET AL. 'Alpha-alumina.' page 138 ;column 71 ; & CS-A-220 143
- CHEMICAL ABSTRACTS, vol. 84, no. 8, 23 February 2976, Columbus, Ohio, US; abstract no. 46726d, KH. N. NURMAGAMBETOV ET AL. 'Removing silicon from the hydrate of aluminum oxide.' page 155 ; & SU-A-485 971

## Description

The present invention relates to a method for producing an α-alumina powder, which is widely used as a raw material of an abrasive, a sintered body, a plasma flame spray coating, a filler, and so on.

As a method of the production of the α-alumina powder, generally a method comprising calcining a transition alumina and/or an alumina compound in air is used. For example, there are known a method comprising hydrothermally treating aluminum hydroxide (a hydrothermal method), a method comprising melting aluminum hydroxide together with a flux and precipitating α-alumina (a flux method), and a method comprising calcining aluminum hydroxide in the presence of a mineralizing agent.

However, when the α-alumina powder is produced by one of the above methods, a raw material having a low content of metal elements such as silicon should be used. Then, the raw material should be purified by a process such as a Bayer process, when bauxite, a mineral containing aluminum and silicon such as an aluminosilicate mineral (for example, kaolin, pyrophyllite, etc.) and so on is used as a raw material.

JP-A-62-46922 relates to a process wherein Si impurities in alumina are removed by treatment with fluorides. DE-B-1 159 418 discloses a method wherein the conversion from Al(OH)₃ in Al₂O₃ during calcination is improved by the presence of fluorides.

CS-A-220 143 refers to a process which saves energy and time in the thermal treatment of Al containing salts due to the presence of inorganic fluorides.

An object of the present invention is to provide a method for producing an α-alumina powder directly from a mineral or compound containing aluminum and silicon, by a dry process only.

This object has been achieved by the surprising finding that α-alumina powder is produced directly from a mineral or compound containing aluminum and silicon by a dry process only, when such mineral or compound is calcined in an atmosphere containing a hydrogen fluoride gas, or an atmosphere containing a fluorine gas and steam.

According to the present invention, there is provided a method for producing an α-alumina powder comprising calcining a mineral or compound which contains aluminum and 1 wt% or more of silicon at a temperature of from 600 °C to 1400°C in an atmosphere containing at least 1.0 vol.% of hydrogen fluoride, or an atmosphere containing at least 1.0 vol.% of fluorine gas and at least 0.1 vol.% of steam.

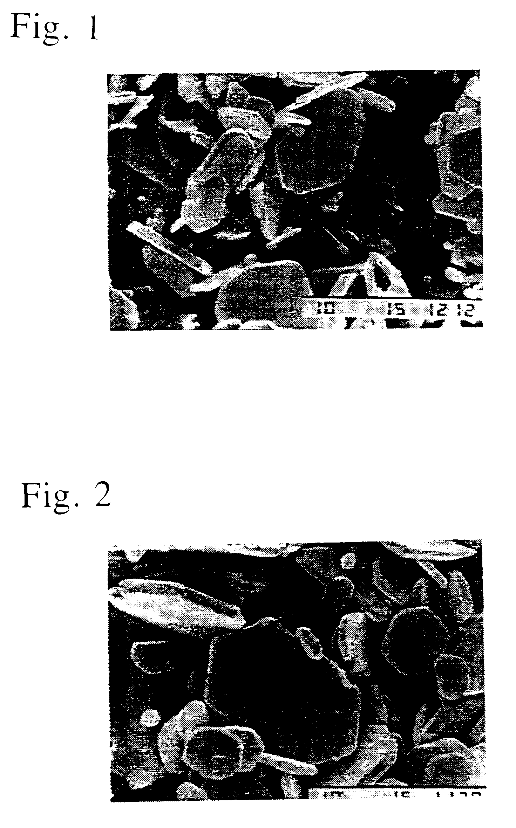

Figs. 1, 2 and 3 are scanning microscopic photographs (x4250) of α-alumina powder particles produced in Examples 1, 6 and 7, respectively.

In the method for producing an α-alumina powder according to present invention, a mineral or compound containing aluminum and silicon is used as a raw material.

The amount of silicon contained in the mineral or compound is 1 wt% or more of the raw material, said amount is reduced in the obtained α-alumince.

Examples of the mineral containing aluminum and silicon are bauxite; aluminosilicates such as kaolin, pyrophyllite, etc.; mullite; and so on.

Examples of the compound containing aluminum and silicon are a mixture of aluminum oxide and silicon oxide, a compound containing aluminum, silicon and oxygen, a mixture of a compound containing aluminum, silicon and oxygen with aluminum oxide and/or silicon oxide, and so on. More concretely, there are exemplified a mixture of transition alumina which is converted to α-alumina by calcination and amorphous silica or quartz; mullite; a mixture of mullite, amorphous silica, quartz and cristobalite.

In the industrial production, as the mineral or compound containing aluminum and silicon, one containing aluminum or an aluminum compound as a main component can be preferably used.

According to the present invention, the α-alumina powder having a very low content of silicon is obtained by calcining the mineral or compound containing aluminum and silicon in the atmosphere containing hydrogen fluoride, or the atmosphere containing the fluorine gas and steam.

In general, a natural mineral, for example, bauxite, the aluminosilicate such as kaolin, pyrophyllite, etc. and mullite contains metal elements other than aluminum and silicon, for example, alkali metals such as sodium and potassium, alkaline earth metals such as magnesium and calcium, iron, titanium and so on. These other metal elements may not be necessarily removed by calcination in the atmosphere containing hydrogen fluoride, or the atmosphere containing the fluorine gas and steam, and may remain in the produced α-alumina powder.

For the production of the α-alumina powder having a higher purity, preferably, bauxite, an aluminosilicate such as kaolin, pyrophyllite, or mullite which contains less metal elements other than aluminum and silicon is used, or the above raw material is pretreated to reduce the content of the metal elements other than aluminum and silicon and then calcined in the atmosphere containing hydrogen fluoride, or the atmosphere containing the fluorine gas and steam.

The pretreatment may be carried out by calcining the raw material in an atmosphere containing a chlorination agent. By the pretreatment, impurity metal elements other than aluminum and silicon are removed, whereby the α-alumina powder having a higher purity can be obtained.

Examples of the chlorination agent are hydrogen chloride, chlorine, phosgene, carbon tetrachloride, aluminum chloride, etc. Among them, hydrogen chloride is preferably used.

In the pretreatment, a concentration of the chlorination agent and a calcination temperature depend on kinds of the impurity metals to be removed and are not necessarily limited. Preferably, the concentration of the chlorination agent is at least 10 vol.%, and the calcination temperature is from 300°C to 1400°C.

The details of this pretreatment process are found in Japanese Patent KOKAI Publication No.246815/1987 (=US Patent No.4699770 or EP-A-223493).

According to the present invention, the raw material is calcined in the atmosphere containing hydrogen fluoride, or the atmosphere containing the fluorine gas and steam.

When hydrogen fluoride is contained in the atmosphere gas, its concentration is at least 1 vol.%, preferably at least 5 vol.%, more preferably at least 10 vol.%.

When the fluorine gas and steam are contained in the atmosphere gas, concentrations of the fluorine gas and steam are at least 1 vol.% and at least 0.1 vol.%, respectively, preferably at least 5 vol.% and at least 1 vol.%, respectively, more preferably at least 10 vol.% and at least 5 vol.%, respectively.

The hydrogen fluoride gas or a mixture of the fluorine gas and steam may be diluted with an inert gas such as nitrogen and argon, hydrogen gas, air, and so on.

A pressure of the atmosphere for the calcination is not specifically limited, and is selected from a pressure range which is industrially employed.

The calcination temperature is from 600 °C to 1400°C, preferably from 700 °C to 1300°C, more preferably from 800°C to 1200°C. When the raw material is calcined in this temperature range, the α-alumina powder can be produced as an industrially advantageous production rate. The produced α-alumina powder suffers from less agglomeration of particles, and has a narrow particle size distribution even just after calcination.

A calcination time is not necessarily limited since it depends on a concentration of the atmosphere gas and the calcination temperature. The calcination time is preferably at least 1 minute, more preferably at least 10 minutes. The method of the present invention can produce the α-alumina powder in a shorter time than the conventional methods.

A source and supplying manner of the atmosphere gas are not limited, insofar as the above atmosphere gas is supplied in a reaction system containing the raw material. As a supply source, a gas in a bomb is generally used. Alternatively, hydrofluoric acid, a fluoride such as ammonium fluoride, a fluorine-containing compound, a fluorine-containing polymer and the like can be used as a source material of hydrogen fluoride or the fluorine gas. In this case, the source material is used in an amount that the above atmosphere gas composition is achieved.

The gas may be supplied in a continuous manner or a batch manner. When the raw material contains large amounts of metal elements other than alminum, such as silicon or alkali metals, the continuous manner is preferred to liberate and remove such other metals as their fluorides. The liberated fluorides may be recovered as by-products. For example, when kaolin is used as the raw material, silicon tetrafluoride is liberated during calcination. Formed silicon tetrafluoride is introduced in water to hydrolyze it, whereby industrially useful silica is obtained as a by-product. In addition, hydrogen fluoride formed by the above hydrolysis can be used as a source of the atmosphere gas.

A type of a calcination apparatus is not limited. Preferably, the calcination apparatus is made of a material which is not corroded by hydrogen fluoride gas, fluorine gas, and the like. More preferably, the calcination apparatus has a mechanism for adjusting atmosphere gas conditions. Since the hydrogen fluoride or fluorine gas is used, the calcination apparatus is an airtight one. Industrially, the calcination is carried out continuously, and a tunnel furnace, a rotary kiln, a pusher furnace, and so on are preferably used.

Since the reaction takes place in an acidic atmosphere, a vessel to be used in the production process of the α-alumina powder is preferably made of an acid-resistant material, and preferably, an alumina crucible or boat made of an acid-resistant brick or graphite, and so on are used.

According to the method of the present invention, it is possible to produce, from the mineral or compound containing aluminum and silicon, the high purity α-alumina powder which comprises homogeneous plate-form particles and contains few or no agglomerated particles which are strongly bonded.

The α-alumina powder particles have the hexagonal close-packed lattice, and are plates having a D/H ratio of 1 to about 30 where D is a maximum particle size in a direction parallel to a hexagonal lattice plane, and H is a particle size in a direction perpendicular to the hexagonal lattice plane.

The produced α-alumina powder contains few or no agglomerated particles which are strongly bonded, and may contain a small amount of agglomerated particles which can be readily dissociated by, for example, a jet mill.

A purity of the α-alumina powder depends on the purity of the raw material. When the raw material is pretreated with the chlorination agent, the purity of the α-alumina powder reaches 98% or higher.

Since the α-alumina powder produced by the method of the present invention has the above described excellent properties, it can be advantageously used as an abrasive, a sintering material, a plasma flame spray coating material, a filler, a raw material of a single crystal, a carrier of a catalyst, a raw material of a fluorescent material, a raw material of a sealing compound, a raw material of a ceramic filter, and so on. Since the particles of α-alumina powder produced by the method of the present invention have the plate form, the powder is useful as a filler of a coating film.

The present invention will be illustrated by the following Example, which do not limit the scope of the present invention in any way.

### Compositions of the raw materials

### 1. Kaolin A

A reagent available from Nakarai Chemical Co.,Ltd. According to the X-ray diffraction analysis, peaks assigned to kaolinite (Al₂Si₂O₅(OH)₄) were observed.

### 2. Kaolin B

A reagent available from Nakarai Chemical Co.,Ltd. According to the X-ray diffraction analysis, peaks assigned to kaolinite (Al₂Si₂O₅(OH)₄) and also peaks assigned to pyrophyllite (Al₂Si₄O₁₀(OH)₂) and quartz (SiO₂) were observed.

### 3. GAIROME clay

SHIN-MOTOYAMA GAIROME 102 available from CERAMIKA HANBAI Co.,Ltd. According to the X-ray diffraction analysis, peaks assigned to kaolinite (Al₂Si₂O₅(OH)₄) and also peaks assigned to quartz (SiO₂), KMgAlSi₄O₁₀(OH)₂, Na_{0.3}(Al,Mg) ₂Si₄O₁₀(OH)₂ · nH₂O, etc. were observed.

### 4. Mullite A

A powder obtained by calcining a mixed powder of aluminum hydroxide which was synthesized by hydrolyzing aluminum isopropoxide, and silica sold by Aerosil, at 1400 °C in the air. According to the X-ray diffraction analysis, peaks assigned to mullite (Al₆Si₂O₁₃) and also α-alumina and cristobalite (SiO₂) were observed.

### 5. Bauxite A

A powder obtained by milling an aqueous slurry of bauxite (Gobe mineral) in an alumina ball mill and drying it at 130 °C. According to the X-ray diffraction analysis, peaks assigned to gibbsite (Al(OH)₃), hematite (Fe₂O₃), kaolinite (Al₂Si₂O₅(OH)₄) and so on were observed.

According to composition analysis by ICP spectroscopy, the powder composition was as follows: Al₂O₃:47.4 wt%, Fe₂O₃:14. 5 wt%, SiO₂:3.9 wt%, TiO₂:3.2 wt%.

### Hydrogen fluoride gas

A hydrogen fluoride gas was prepared by decomposing ammonium fluoride. A composition of an atmosphere gas was adjusted by introducing the hydrogen fluoride gas obtained by heating ammonium fluoride at its sublimation temperature of 220 °C in a muffle. Ammonium fluoride was completely decomposed when it was maintained at 1100°C to give a gas comprising 33 vol.% of hydrogen fluoride (HF), 17 vol.% of nitrogen gas (N₂) and 50 vol.% of hydrogen gas (H₂).

### Calcination apparatus and calcination conditions

A raw material was charged in an alumina boat and calcined in a cylindrical furnace having an alumina muffle with a diameter of 27 mm and a length of 1000 mm (DSPSH-28 manufactured by Motoyama Co.,Ltd.). A furnace temperature was raised at a heating rate of 300 °C/hr. while flowing a nitrogen gas, and the atmosphere gas was introduced in the muffle when the furnace temperature reached the temperature for introducing the atmosphere gas.

After the temperature reached the predetermined temperature, that furnace temperature was maintained for a predetermined time. These predetermined temperature and time are referred to as a maintaining temperature (calcination temperature) and a maintaining time (calcination time), respectively.

After the predetermined maintaining time, the furnace temperature was lowered at a cooling rate of 300°C/hr. to room temperature to obtain an intended α-alumina powder.

### Determination of crystal phases

The crystal phases of the powders used in the Examples and the powders obtained in the Examples were determined using an X-ray diffraction apparatus (RAD-C manufactured by Rigaku Denki Co.,Ltd.).

### Composition analysis

Compositions of the powders used in the Examples and the powders obtained in the Examples were analyzed using an ICP spectroscopic analyzer (SPS-1200 VR manufactured by Seiko Electronics Co.,Ltd.).

### Example 1

Using Kaolin A (0.1 g) as a raw material, the reaction was carried out with introducing the decomposition gas of ammonium fluoride (2.91 g) as the atmosphere gas in the cylindrical furnace. The atmosphere gas introduction temperature was 700 °C, the maintaining temperature (calcination temperature) was 1100°C, and the maintaining time (calcination time) was 30 minutes. The scanning electron microscopic (SEM) photograph of the obtained powder is shown in Fig. 1. As the result of the X-ray diffraction analysis, only the peaks assigned to α-alumina were observed, while no other peaks was observed. The conditions and results are shown in Tables 1 to 4.

### Examples 2, 3 and 4

Under the same conditions as those in Example 1 except that 0.2 g of Kaolin B (Example 2), 0.2 g of Mullite A (Example 3), or 0.19 g of GAIROME clay (Example 4) was used, the reaction was carried out. The conditions and results are shown in Tables 1 to 4.

### Example 5

Bauxite A (0.19 g) as a raw material was precalcined by introducing 100 vol.% hydrogen chloride gas as the atmosphere gas in the cylindrical furnace from the room temperature, at the maintaining temperature (calcination temperature) of 800 °C for the maintaining time (calcination time) of 180 minutes. As the hydrogen chloride gas manufactured by Tsurumi Soda Co.,Ltd. (purity, 99.9%) was used.

The powder obtained by the precalcination was reacted under the same conditions as those in Example 1. The conditions and results are shown in Tables 1 to 4.

### Example 6

Bauxite A (1.64 g) as a raw material was precalcined by introducing 100 vol.% hydrogen chloride gas as the atmosphere gas in the cylindrical furnace from the room temperature, at the maintaining temperature (calcination temperature) of 1100°C for the maintaining time (calcination time) of 30 minutes.

The powder obtained by the precalcination was reacted under the same conditions as those in Example 1 except that a decomposition gas of ammonium fluoride (5.8 g) was used as the atmosphere gas. The conditions and results are shown in Tables 1 to 4.

The SEM photograph of the obtained powder is shown in Fig.2.

### Example 7

GAIROME clay (0.88 g) as a raw material was precalcined by introducing 100 vol.% hydrogen chloride gas as the atmosphere gas in the cylindrical furnace from the room temperature, at the maintaining temperature (calcination temperature) of 1100 °C for the maintaining time (calcination time) of 120 minutes.

The powder obtained by the precalcination was reacted under the same conditions as those in Example 1 except that a decomposition gas of ammonium fluoride (5.8 g) was used as the atmosphere gas. The conditions and results are shown in Tables 1 to 4.

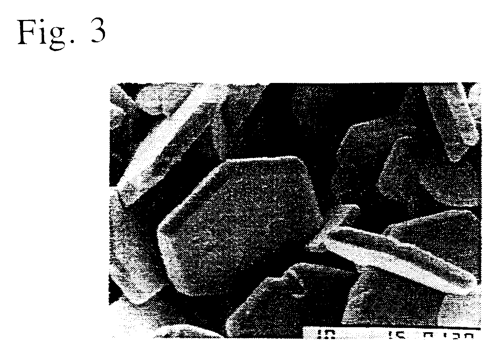

The SEM photograph of the obtained powder is shown in Fig.3.

The results of the elemental analysis of the powders obtained in Examples 6 and 7 are shown in Table 5.

### Comparative Example 1

Kaolin A (0.1 g) was calcined in an air at 1100 °C for 30 minutes. The conditions and results are shown in Tables 1 to 4.

### Comparative Example 2

Bauxite A (0.1 g) was calcined in an air at 1100°C for 30 minutes. The conditions and results are shown in Tables 1 to 4.

### Comparative Example 3

GAIROME clay (0.1 g) was calcined in an air at 1100 °C for 30 minutes. The conditions and results are shown in Tables 1 to 4.

**Table 1**

| Ex. No. | Raw material | Crystal phases of |
|---|---|---|
| Ex. 1 | Kaolin A | kaolinite |
| Ex. 2 | Kaolin B | Kaolinite, quartz, pyrophyllite |
| Ex. 3 | Mullite A | Mullite, α-alumina, cristobalite |
| Ex. 4 | GAIROME clay | Kaolinite, quartz, etc. |
| Ex. 5 | Bauxite A | Gibbsite, hematite, kaolinite, etc. |
| Ex. 6 | Bauxite A | Gibbsite, hematite, kaolinite, etc. |
| Ex. 7 | GAIROME clay | Kaolinite, quartz, etc. |
| C. Ex. 1 | Kaolin A | Kaolinite |
| C. Ex. 2 | Bauxite A | Gibbsite, hematite, kaolinite, etc. |
| C. Ex. 3 | GAIROME clay | Kaolinite, quartz, etc. |

**Table 2**

| Example No. | Precalcination conditions | | | |
|---|---|---|---|---|
| | HCl gas (vol. %) | Introduction temp. (°C) | Maintaining temp. (°C) | Maintaining time (min.) |
| Ex. 1 | No precalcination | | | |
| Ex. 2 | No precalcination | | | |
| Ex. 3 | No precalcination | | | |
| Ex. 4 | No precalcination | | | |
| Ex. 5 | 100 | Room temp. | 800 | 180 |
| Ex. 6 | 100 | Room temp. | 1100 | 30 |
| Ex. 7 | 100 | Room temp. | 1100 | 120 |
| C. Ex. 1 | No precalcination | | | |
| C. Ex. 2 | No precalcination | | | |
| C. Ex. 3 | No precalcination | | | |

**Table 3**

| Example No. | Calcination Atmosphere (vol. %) | | | Calcination conditions | | |
|---|---|---|---|---|---|---|
| | HF gas | N₂ gas | H₂ gas | Introduction temp. (°C) | Maintaining temp. (°C) | Maintaining time (min.) |
| Ex. 1 | 33 | 17 | 50 | 700 | 1100 | 30 |
| Ex. 2 | 33 | 17 | 50 | 700 | 1100 | 30 |
| Ex. 3 | 33 | 17 | 50 | 700 | 1100 | 30 |
| Ex. 4 | 33 | 17 | 50 | 700 | 1100 | 30 |
| Ex. 5 | 33 | 17 | 50 | 700 | 1100 | 30 |
| Ex. 6 | 33 | 17 | 50 | 700 | 1100 | 30 |
| Ex. 7 | 33 | 17 | 50 | 700 | 1100 | 30 |
| C. Ex. 1 | In air | | | | 1100 | 30 |
| C. Ex. 2 | In air | | | | 1100 | 30 |
| C. Ex. 3 | In aid | | | | 1100 | 30 |

**Table 4**

| Example No. | Crystal phase(s) of obtained powder |
|---|---|
| Ex. 1 | α-Alumina |
| Ex. 2 | α-Alumina |
| Ex. 3 | α-Alumina |
| Ex. 4 | α-Alumina, iron oxide (trace) |
| Ex. 5 | α-Alumina |
| Ex. 6 | α-Alumina |
| Ex. 7 | α-Alumina |
| C. Ex. 1 | Transition alumina, quartz, etc. |
| C. Ex. 2 | Transition alumina, quartz, hematite, etc. |
| C. Ex. 3 | Transition alumina, quartz, etc. |

**Table 5**

| Element | Content (wt. %) | |
|---|---|---|
| | Example 6 | Example 7 |
| Al | 51.1 | 51.5 |
| Fe | 0.23 | 0.01 |
| Si | 0.01 | 0.01 |
| Ti | 0.92 | 0.60 |
| Ca | 0.02 | 0.47 |
| Mg | 0.02 | 0.28 |
| K | 0.01 | 0.01 |

## Claims

1. A method for producing an α-alumina powder comprising calcining a mineral or compound which contains aluminum and 1 wt.% or more of silicon at a temperature of from 600 °C to 1400°C in an atmosphere containing at least 1.0 vol.% of hydrogen fluoride, or an atmosphere containing at least 1.0 vol.% of fluorine gas and at least 0.1 vol.% of steam.

2. The method according to claim 1, wherein, before calcination, said mineral or compound which contains aluminum and 1 wt.% or more of silicon is precalcined at a temperature of from 300°C to 1400°C in an atmosphere containing a chlorination agent.

3. A method according to any of claims 1 and 2, wherein said compound containing aluminium and silicon is a mineral.

4. The method according to any of claims 1 to 3, wherein said mineral which contains aluminum and silicon is at least one material selected from bauxite, aluminosilicates and mullite.

5. The method according to any of claims 1 to 3, wherein said compound which contains aluminum and silicon is at least one material selected from a mixture of aluminum oxide and silicon oxide, a compound containing aluminum, silicon and oxygen, and a mixture of a compound containing aluminum, silicon and oxygen with aluminum oxide and/or silicon oxide.

6. The method according to any of claims 1 to 5, wherein a calcination temperature is from 800°C to 1200°C.

7. The method according to any of claims 2 to 6, wherein said chlorination agent is at least one material selected from hydrogen chloride, chlorine, phosgene, carbon tetrachloride and aluminum chloride.

8. The method according to any of claims 2 to 7, wherein a concentration of said chlorination agent is at least 10 vol. % of the atmosphere gas.

## Patentansprüche

1. Verfahren zur Herstellung eines α-Aluminiumoxidpulvers, umfassend die Kalzinierung eines Minerals oder einer Verbindung, die Aluminium und 1 Gew.-% oder mehr Silizium enthält, bei einer Temperatur von 600°C bis 1400°C in einer Atmosphäre, die mindestens 1,0 Vol.-% Fluorwasserstoff enthält, oder in einer Atmosphäre, die mindestens 1,0 Vol.-% Fluorgas und mindestens 0,1 Vol.-% Dampf enthält.

2. Verfahren nach Anspruch 1, wobei das Mineral oder die Verbindung, die Aluminium und 1 Gew.-% oder mehr Silizium enthält, vor der Kalzinierung bei einer Temperatur von 300°C bis 1400°C in einer Atmosphäre, die ein Chlorierungsmittel enthält, vorkalziniert wird.

3. Verfahren nach einem der Ansprüche 1 und 2, wobei die Verbindung, die Aluminium und Silizium enthält, ein Mineral ist.

4. Verfahren nach einem der Ansprüche 1 bis 3, wobei das Mineral, das Aluminium und Silizium enthält, mindestens ein Material, ausgewählt aus Bauxit, Aluminosilikaten und Mullit ist.

5. Verfahren nach einem der Ansprüche 1 bis 3, wobei die Verbindung, die Aluminium und Silizium enthält, mindestens ein Material, ausgewählt aus einem Gemisch von Aluminiumoxid und Siliziumdioxid, einer Verbindung, die Aluminium, Silizium und Sauerstoff enthält, und einem Gemisch aus einer Verbindung, die Aluminium, Silizium und Sauerstoff enthält, mit Aluminiumoxid und/oder Siliziumdioxid, ist.

6. Verfahren nach einem der Ansprüche 1 bis 5, wobei die Kalzinierungstemperatur 800°C bis 1200°C beträgt.

7. Verfahren nach einem der Ansprüche 2 bis 6, wobei das Chlorierungsmittel mindestens ein Material, ausgewählt aus Chlorwasserstoff, Chlor, Phosgen, Kohlenstofftetrachlorid und Aluminiumchlorid, ist.

8. Verfahren nach einem der Ansprüche 2 bis 7, wobei die Konzentration des Chlorierungsmittels mindestens 10 Vol.-% des Atmosphärengases beträgt.

## Revendications

1. Procédé pour la production d'une poudre d'α-alumine comprenant la calcination d'un minéral ou d'un composé, qui contient de l'aluminium et 1% en poids ou plus de silicium, à une température comprise entre 600°C et 1400°C dans une atmosphère contenant au moins 1,0% en volume de fluorure d'hydrogène ou dans une atmosphère contenant au moins 1,0 % en volume de fluor gazeux et au moins 0,1 % en volume de vapeur d'eau.

2. Procédé selon la revendication 1, dans lequel, avant la calcination, on précalcine ledit minéral ou ledit composé, qui contient de l'aluminium et 1% en poid ou plus de silicium, à une température comprise entre 300°C et 1400°C dans une atmosphère contenant un agent de chloration.

3. Procédé selon l'une quelconque des revendications 1 et 2, dans lequel ledit composé contenant de l'aluminium et du silicium est un minéral.

4. Procédé selon l'une quelconque des revendications 1 à 3, dans lequel ledit minéral qui contient de l'aluminium et du silicium et au moins un matériau choisi parmi la bauxite, les aluminosilicates et la mullite.

5. Procédé selon l'une quelconque des revendications 1 à 3, dans lequel ledit composé qui contient de l'aluminium et du silicium est au moins un matériau choisi parmi un mélange d'oxyde d'aluminium et d'oxyde de silicium, un composé contenant de l'aluminium, du silicium et de l'oxygène et un mélange d'un composé contenant de l'aluminium, du silicium et de l'oxygène avec de l'oxyde d'aluminium et/ou de l'oxyde de silicium.

6. Procédé selon l'une quelconque des revendications 1 à 5, dans lequel la température de calcination est comprise entre 800°C et 1200°C.

7. Procédé selon l'une quelconque des revendications 2 à 6, dans lequel ledit agent de chloration est au moins un matériau choisi parmi le chlorure d'hydrogène, le chlore, le phosgène, le tétrachlorure de carbone et le chlorure d'aluminium.

8. Procédé selon l'une quelconque des revendications 2 à 7, dans lequel la concentration en ledit agent de chloration est d'au moins 10 % en volume de l'atmosphère gazeuse.
